# DEMANDE DE BREVET EUROPEEN

(11) **EP 2 365 023 A1**
(43) Date de publication de la demande: **14.09.2011**
(21) Numéro de dépôt: 11290114.5
(22) Date de dépôt: 04.03.2011
(51) Int. Cl.: C08J 3/075, C09K 5/06

(54) **Composition et méthode de gélification d'un matériau à changement de phase**

(30) Priorité: 10.03.2010 FR 1000953
(71) Demandeur: IFP Energies nouvelles, 92852 Rueil-Malmaison Cedex (FR)
(72) Inventeur: Pasquier, David, 92150 Suresnes (FR); Rousseau, Lionel, 78440 Issou (FR)

(57) **Abrégé**

- La présente invention concerne une composition d'un gel à changement de phase comportant les éléments suivants :
■ un matériau à changement de phase (MCP) comportant au moins un sel en solution aqueuse formant un eutectique,
■ au moins un polymère hydrosoluble comportant des motifs hydrophobes,
■ des grains super absorbants de polymère réticulés de granulométrie comprise entre 0,2 mm et 4 mm.

## Description

La présente invention concerne le domaine de stockage et de restitution d'énergie thermique par chaleur latente. En particulier, l'invention fournit une composition gélifiée comportant des matériaux à changement de phase, ainsi que son procédé de fabrication.

Les matériaux à changement de phase (MCP) ont la propriété de se liquéfier au-delà d'une certaine température caractéristique de chaque type de matériau en absorbant les calories de l'atmosphère ambiante et de les restituer lorsque la température baisse. Ils peuvent, par exemple, réduire les besoins en climatisation durant les périodes chaudes. Les matériaux à changement de phase utilisés dans l'invention sont des sels solubles dans l'eau (ou des mélanges de ces sels) formant un eutectique qui a pour principal intérêt, de posséder une forte capacité de stockage d'énergie par unité de volume (≈ 350 kJ/L), une conductivité thermique relativement élevée (0,5 W.m⁻¹.K⁻¹) et une résistance au feu. En gélifiant de tels MCP, on assure une stabilité dimensionnelle des matériaux à changement de phase, même lorsqu'ils sont à l'état fondu. Ainsi, on empêche l'écoulement du MCP lors de la transition de phase solide-liquide, ce qui d'un point de vue pratique évite de nombreux risques de fuite.

La gélification d'un MCP doit donc répondre à plusieurs critères :
● Facilité de pompage : la formulation doit pouvoir être injectée dans des contenants.
● Temps de structuration : il doit être supérieur au temps de mise en place dans les contenants.
● Résistance à l'écoulement : le gel doit posséder un module élastique suffisamment important et une contrainte seuil élevée après structuration.
● Conservation de la température de changement d'état solide/liquide.
● Restitution de l'énergie : le gel à changement de phase doit restituer une énergie suffisante par chaleur latente.

On connaît dans l'art antérieur :
- le document WO2002062874 concernant des gels de paraffine développés à l'aide d'un copolymère tribloc SEBS non applicables dans notre cas où il est nécessaire d'utiliser un mode de gélification à base de polymères hydrosolubles. Leur comportement au feu doit faire l'objet d'améliorations.
- Le brevet US6402982 concernant un moyen d'augmenter la viscosité d'un sel eutectique par ajout de silice pour former un gel qui, d'une part ne forme pas un gel cohésif et pénalise, d'autre part, la restitution d'énergie de près de 30 %.
- Le document WO2004067671 concernant l'obtention de MCP « encapsulés » dans une matrice polyacrylamide également obtenue par réticulation *in situ.* Les matériaux obtenus restent visqueux et pâteux mais s'écoulent, ce qui pose problème lors de leur conditionnement. Leur comportement au feu doit également faire l'objet d'améliorations.
- L. Royon et al. ont montré (L. Royon, G. Guiffant, P. Flaud, Energy Convers. Mgmt, 38(6) 517-524, 1997) qu'il est possible de polymériser et réticuler un polyacrylamide au sein d'un MCP de type sel eutectique hydraté, par polymérisation d'acrylamide et de bisacrylamide; néanmoins, cette technique est chère, compliquée et difficile à mettre en oeuvre industriellement.

Le principal inconvénient de l'art antérieur est que la réaction de polymérisation/réticulation n'est pas complète et que des monomères résiduels subsistent en solution dans le matériau à changement de phase. Cela perturbe la cristallisation et induit une diminution importante de la chaleur latente de fusion/cristallisation et peut, dans certains cas, décaler la température de fusion ou de cristallisation de ce matériau à changement de phase. Il existe également des risques environnementaux liés à la présence potentielle de monomères non polymérisés capables d'induire une nocivité potentielle.

Ainsi, la présente invention concerne une composition d'un gel à changement de phase comportant les éléments suivants :
■ un matériau à changement de phase (MCP) comportant au moins un sel en solution aqueuse formant un eutectique,
■ au moins un polymère hydrosoluble comportant des motifs hydrophobes,
■ des grains super absorbants de polymère réticulés de granulométrie comprise entre 0,2 mm et 4 mm.

Le polymère hydrosoluble peut être un polymère de synthèse (a) de structure suivante: 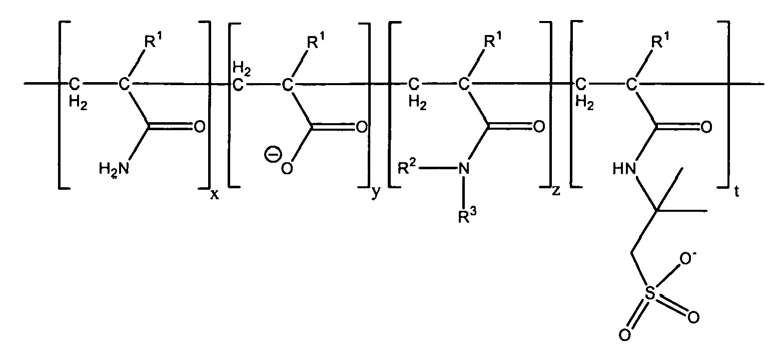 R¹, semblables ou différents, sont un radical méthyle ou hydrogène,
R² est au moins l'un des radicaux suivants:
■ un radical alkyle linéaire ou ramifié contenant entre 6 et 30 atomes de carbone, et préférentiellement entre 9 et 18 atomes de carbone,
■ un radical cycloalkyle, contenant entre 5 et 8 carbones cycliques éventuellement substitué,
■ un radical aryle contenant entre 6 et 12 atomes de carbone, éventuellement substitué, ou toute autre chaîne alkylaromatique
R³ est soit :
■ un hydrogène,
■ un radical méthyle,
■ R², semblables ou différents,
avec x+y+z+t=1

Le polymère hydrosoluble de synthèse (a) peut contenir au moins une unité monomère porteur de motifs hydrophobes avec z compris entre 0,005 et 0,03, et préférentiellement entre 0,01 et 0,02, et dans laquelle y est compris entre 0,01 et 0,1.

Le polymère hydrosoluble de synthèse peut ne pas contenir d'unité monomère porteur de motifs sulfonés, soit t=0.

Le polymère hydrosoluble de synthèse peut contenir au moins une unité monomère porteur de motifs sulfonés avec t compris entre 0,03 et 0,3, et préférentiellement entre 0,1 et 0,2.

Le polymère hydrosoluble de synthèse peut posséder une masse moléculaire comprise entre 0,3x10⁶ g/mol et 3x10⁶ g/mol, et préférentiellement comprise entre 0,8x10⁶ g/mol et 1,2x10⁶ g/mol.

Le polymère hydrosoluble peut être un polymère naturel du type polysaccharide modifié chimiquement et porteur de motifs hydrophobes, issu de la famille des guars ou des celluloses et porteurs d'au moins un radical alkyle linéaire ou ramifié entre C10 et C20 atomes de carbone, et préférentiellement entre C12 et C18, pour une masse moléculaire comprise entre 0,3x10⁶ g/mol et 3x10⁶ g/mol, et préférentiellement comprise entre 0,8x10⁶ g/mol et 1,2x10⁶ g/mol.

La composition peut comprendre entre 0,5% et 3% de polymère hydrosoluble comportant des motifs hydrophobes, pourcentage rapporté à la masse totale de la composition, et de préférence entre 1% et 2%.

Les grains super absorbant peuvent être composés de copolymère d'acide acrylique et d'acrylate de sodium réticulé partiellement hydrolysés à environ 10%, ramifiés, réticulés rigides ou élastiques.

La composition peut comprendre entre 3% et 5% massique de grains de polymère réticulés, pourcentage rapporté à la masse totale de gel à changement de phase.

L'eutectique peut posséder un point de fusion compris entre -40°C et +90°C et préférentiellement entre -20°C et +60°C.

Le matériau à changement de phase peut comporter 21% massique de sel KCl en solution aqueuse.

Le matériau à changement de phase peut comporter 44% de Na₂SO₄ en solution aqueuse.

L'invention concerne également une méthode de gélification d'un matériau à changement de phase (MCP) pour le stockage et la restitution d'énergie thermique par chaleur latente, dans laquelle on effectue les étapes suivantes :
- on prépare une composition aqueuse selon l'invention,
- on injecte ladite composition dans des contenants avant la structuration du gel. Par structuration du gel, il faut comprendre le moment où la composition n'est plus injectable dans les contenants.

Selon la méthode, on optimise les propriétés mécaniques du gel à changement de phase par la quantité de grains super absorbant de polymère réticulés ajoutée.

La présente invention peut être avantageusement appliquée au stockage et à la restitution d'énergie thermique.

La présente invention décrit donc une nouvelle composition gélifiante de matériau à changement de phase constituée dudit matériau à changement de phase et d'une base gélifiante. Selon un des modes de réalisation, la base gélifiante comprend l'un et/ou l'autre des polymères (a) ou (b) suivants:
- un polymère vinylique hydrosoluble partiellement hydrolysé et porteur de motifs hydrophobes. Ce polymère vinylique est obtenu par polymérisation et précipitation. Les différents monomères sont solubilisés dans un solvant adapté et lors de la polymérisation, les chaînes de polymère atteignent une masse molaire critique qui entraîne leur précipitation. Le polymère est alors extrait par filtration, lavé puis séché. La structure générale de ce polymère est présentée comme suit :
   Polymère (a) 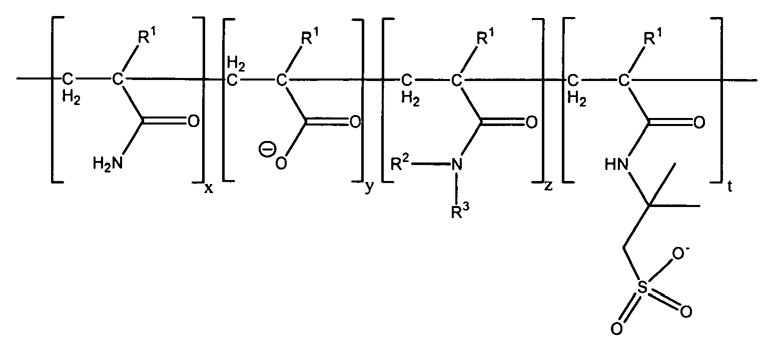
      ο où la troisième unité monomère est désignée comme le monomère hydrophobe,
      ο où la quatrième unité monomère est désignée comme le monomère sulfoné,
      ο où les symboles R¹, semblables ou différents, représentent chacun un radical méthyle ou un hydrogène,
      o où le symbole R² représente l'un au moins des radicaux suivants:
         ■ un radical alkyle linéaire ou ramifié contenant entre 6 et 30 atomes de carbone, et préférentiellement entre 9 et 18 atomes de carbone,
         ■ un radical cycloalkyle, contenant entre 5 et 8 carbones cycliques éventuellement substitué,
         ■ un radical aryle contenant entre 6 et 12 atomes de carbone, éventuellement substitué, ou toute autre chaîne alkylaromatique,
      o où le symbole R³ représente soit :
         ■ un hydrogène,
         ■ un radical méthyle,
         ■ un radical semblable ou différent de **R²** et de la même famille que R².
      o où x, y, z, et t définissent pour le polymère la fraction molaire de chaque unité monomère. La répartition de motifs peut varier de complètement séquencée à statistique, liée au mode de synthèse et aux rapports de réactivité des monomères;
      o où y est compris entre 0,01 et 0,1 et préférentiellement entre 0,05 et 0,1. Ces monomères définissent le taux d'hydrolyse du polymère;
      o où z est compris entre 0,005 et 0,03 et préférentiellement entre 0,01 et 0,02. Ces unités monomères ont pour fonction de faciliter la rhéofluidification de la composition (fonction importante pour la mise en place de la composition dans les contenants) et permet une gélification naturelle au repos de la composition par association entre motifs hydrophobes;
      o où t est soit nul, soit compris entre 0,03 et 0,3 et préférentiellement entre 0,1 et 0,2. Ces unités monomères confèrent différentes propriétés nécessaires et utiles au polymère et à son comportement dans la formulation et au gel final. Notamment, une meilleure stabilité en température, une moindre sensibilité aux effets de sels ou de pH, un effet associatif entre motifs hydrophobes exacerbé par rapport à un polymère ayant la même fraction molaire de motifs hydrophobes (z) et t=0, sans diminuer la solubilité du polymère,
      o où x représente la fraction molaire complémentaire telle que x+y+z+t=1 et correspondant au pouvoir visqueux en relation avec la masse moléculaire.
- un polymère hydrosoluble (b) naturel de type polysaccharide, modifié chimiquement et porteur de motifs hydrophobes alkyle linéaire ou ramifié contenant entre 3 et 20 atomes de carbone, et préférentiellement entre 12 et 18 atomes de carbone. Ce polysaccharide modifié peut être issu de la famille des guars (hydroxypropyl-, hydroxybutyl- guars, tels que les guars hydrophobisées de la société Lamberti), hydroxyéthyl celluloses, amidons modifiés, inulines, porteurs d'un, ou plusieurs motifs hydrophobes. La masse moléculaire de ce polymère est comprise entre 300000 g/mol et 3000000 g/mol et préférentiellement d'environ 2000000 g/mol.

La présence de motifs hydrophobes sur le polymère hydrosoluble, qu'il soit naturel (b) ou de synthèse (a) leur confère :
● une aptitude naturelle à la gélification au repos ou à un très faible gradient de vitesse grâce à l'association entre les motifs hydrophobes de plusieurs chaînes de polymère,
● une forte rhéofluidification, c'est-à-dire que la viscosité chute rapidement avec l'augmentation du gradient de vitesse, comme le décrivent les exemples du Tableau 1 où la viscosité chute de près de 99% pour une augmentation de trois décades du gradient de vitesse,
● une rhéofluidification réversible grâce à la restructuration rapide des chaînes porteuses de motifs hydrophobes, d'où un retour rapide à la viscosité initiale lorsque la formulation gélifiante est mise en place dans les contenants,
● un comportement de type solide viscoélastique à partir d'une certaine concentration, propre à chaque polymère. Par exemple, lorsque y=0,05, z=0,03 et t=0 pour le polymère (a) et pour un dérivé du guar porteur de motifs hydrophobes en C12-C18 pour le polymère (b). Cela est illustré par le tableau 2 qui donne le comportement élastique dominant: le module élastique plateau G₀' est très supérieur au module visqueux plateau G₀".

**Tableau 1**

| | Viscosité apparente (Pa.s) | | |
|---|---|---|---|
| Gradient de cisaillement (s⁻¹) | 1% de polymère (a) de type y=0,05, z=0,03 et t=0 | 1% de polymère (a) de type y=0,05, z=0,03 et t=0,2 | 5% de polymère (b) de la famille des hydroxypropylguar hydrophobisées |
| 0,12 | 59 | 318 | 2230 |
| 1,2 | 9,4 | 63 | 328 |
| 12 | 2,2 | 6,9 | 39 |
| 120 | 0,4 | 1,0 | 5 |

Le Tableau 1 donne les viscosités apparentes de polymères en solution aqueuse saline à 25°C et mesurées à différents gradients de vitesse.

**Tableau 2:**

| | Module viscoélastique | | |
|---|---|---|---|
| Contrainte oscillatoire | 1% de polymère (a) de type y=0,05, z=0,03 et t=0 | 1% de polymère (a) de type y=0,05, z=0,03 et t=0,2 | 5% de polymère (b) de la famille des hydroxypropylguar hydrophobisés |
| entre 0,01 et 5 Pa | G₀'=14 Pa | G₀'=330 Pa | G₀'=750 Pa |
| (domaine linéaire) | G₀"=2,7 Pa | G₀"=72 Pa | G₀"=220 Pa |

Le tableau 2 donne les modules viscoélastiques à 25 °C et à 1 Hz de différentes solutions aqueuses salines de polymères (deux polymères de la famille (a) et un de la famille (b)).

La gélification des eutectiques à l'aide de polymère vinylique de synthèse partiellement hydrolysé ou de polymère naturel modifié chimiquement, et porteurs de motifs hydrophobes est obtenue par la présente invention à condition d'avoir des associations suffisamment fortes entre les motifs hydrophobes, tout en conservant toutefois une bonne solubilité du polymère hydrosoluble dans la solution aqueuse saline constituant le MCP (sels formant des eutectiques). La qualité du gel obtenu est fonction à la fois de la masse moléculaire du polymère, de la nature et de la fraction molaire en motif hydrophobe, de la concentration en polymère associatif dans la phase aqueuse, du volume hydrodynamique qu'occupe ce polymère dans le milieu et de la nature des sels eutectiques constituants le MCP (ions monovalents, divalents, ou autres). En choisissant judicieusement le copolymère associatif, on parvient à la formation d'un gel assez fort. Mais une concentration non négligeable est nécessaire en polymère hydrosoluble pour obtenir de bonnes propriétés mécaniques finales, ce qui peut conduire à des problèmes de mise en oeuvre : la viscosité augmentant fortement lors de l'ajout et du gonflement de ce polymère mis en solution.

Selon un mode de réalisation de l'invention, on améliore avantageusement les propriétés mécaniques du gel à changement de phase, en diminuant la concentration en polymère, qu'il soit (a) ou (b), tout en ajoutant des grains de polymère réticulés, par exemple composés de copolymère d'acide acrylique et d'acrylate de sodium réticulé, qui se présentent sous la forme de petites particules solides pouvant absorber en quelques dizaines de secondes plusieurs centaines de fois leur poids en eau (polymères super absorbants), de granulométrie comprise entre 0,2 mm et 4 mm après absorption d'eau. Ces particules sont couramment employées dans les couches-culottes jetables ou dans l'industrie agroalimentaire (rétention d'eau). La structure du polymère est fortement hydrophile. Replié sur lui-même à l'état sec, le réseau se déploie en présence d'eau ou de solution saline, le grain gonfle et forme un gel translucide plus volumineux de plusieurs dizaines ou plusieurs centaines de fois que le grain sec d'origine.

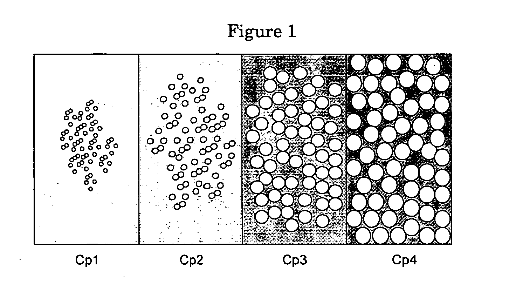

Le MCP est ainsi absorbé par les super absorbants, ce qui au fur et à mesure du gonflement des grains de super absorbants, augmente la concentration en solution du polymère vinylique de synthèse partiellement hydrolysé ou du polymère naturel modifié chimiquement, porteurs de motifs hydrophobes. La figure 1 montre que la concentration Cp de la solution de polymère (a) ou de (b) (référence 1) augmente avec le gonflement des grains de super absorbant (Cp1 < Cp2 < Cp3 < Cp4).

Les effets associatifs s'en retrouvent progressivement exacerbés jusqu'à obtenir un système homogène et cohésif. Le polymère vinylique de synthèse partiellement hydrolysé, ou le polymère naturel modifié chimiquement, porteurs de motifs hydrophobes, vient alors créer une cohésion entre les grains de super absorbants par synergie créant ainsi une structure homogène d'un point de vue macroscopique qui possède des propriétés mécaniques tout à fait satisfaisantes pour les applications.

Le suivi des modules élastiques et visqueux (G' et G") en fonction du temps lors d'un cisaillement oscillatoire de petite déformation avec un rhéomètre rotatif de grande sensibilité (TA Instruments AR2000) équipé d'un bain thermostaté, ont permis d'apprécier les propriétés mécaniques d'un gel à changement de phase selon une variante de l'invention, et de mettre en évidence les effets collaboratifs entre le polymère vinylique de synthèse partiellement hydrolysé ou le polymère naturel modifié chimiquement, porteurs de motifs hydrophobes et les super absorbants. Les mesures rhéologiques réalisées avec ce rhéomètre ont montré que le gel développe un comportement de type solide viscoélastique plus important qui dépend également de la concentration en super absorbants, comme le décrit les exemples du Tableau 3.

**Tableau 3**

| | Fraction massique en super absorbant | | | |
|---|---|---|---|---|
| Fraction massique en (a) (y=0,92, z=0,03 et t=0) | 0% | 2% | 4% | 6% |
| 1% | G₀'=14 Pa | G₀'=120 Pa | G₀'=485 Pa | G₀'=744 Pa |
| | G₀"=2,7 Pa | G₀"=30 Pa | G₀"=103 Pa | G₀"=160 Pa |
| Fraction massique de **MCP** (KCl 21% en masse dans l'eau) | 99% | 97% | 95% | 93% |

Le Tableau 3 donne les modules viscoélastiques à 25 °C à 1 Hz d'un gel constitué d'un MCP (KCl 21% dans H₂O), à différentes fractions massiques en super absorbant et contenant 1% massique de polymère (a), à une contrainte oscillatoire comprise entre 0,01 Pa et 5 Pa (domaine linéaire), géométrie plan-plan de diamètre 40 mm et entrefer de 2 mm.

De la sorte, la perte des propriétés mécaniques occasionnée par la diminution de la concentration en (a) est compensée par l'ajout des grains de polymère réticulés composés de copolymère d'acide acrylique et d'acrylate de sodium réticulé. On obtient des résultats similaires avec les polymères de type (b).

Les super absorbants ne peuvent pas être utilisés seuls pour tenter de gélifier un MCP. En effet, les particules de super absorbant n'ayant pas de cohésion entre elles. Cela provoque l'écoulement de la solution, ce qui est contraire à l'invention.

En comparaison avec une solution de polymère (a) + MCP, les propriétés mécaniques de ces mélanges sont également meilleures avec une augmentation du domaine d'élasticité linéaire, car les particules de super absorbants sont réticulées chimiquement, contrairement aux associations hydrophobes et contribuent mécaniquement au comportement élastique global du gel, comme le décrivent les exemples du Tableau 4. On obtient des résultats similaires avec le polymère (b).

**Tableau 4**

| | Fraction massique en super absorbant | | | |
|---|---|---|---|---|
| Fraction massique en (a) (y=0,92, z=0,03 et t=0) | 0% | 2% | 4% | 6% |
| 1% | <5 Pa | <15 Pa | <70 Pa | <150 Pa |
| Fraction massique de **MCP** (KCl 21% en masse dans l'eau) | 99% | 97% | 95% | 93% |

Le Tableau 4 donne le domaine d'élasticité linéaire à 25°C et 1 Hz d'un gel constitué d'un MCP (KCl 21% en masse dans l'eau), à différentes fractions massiques en super absorbant et contenant 1% massique de polymère gélifiant (a), rhéomètre TA Instruments AR 2000, géométrie plan-plan de diamètre 40 mm et entrefer de 2 mm.

Les modules élastique (G') et visqueux (G") du gel obtenu à partir des deux composés sont supérieurs à la somme de ceux du super absorbant seul et de ceux de la solution de polymère (a) ou (b), mettant ainsi en évidence les **effets synergétiques** entre le polymère (a), ou (b), avec les super absorbants, comme le décrit le Tableau 5.

**Tableau 5**

| | | |
|---|---|---|
| Module viscoélastique (Contrainte oscillatoire 5 Pa) | G'à 1 Hz | G" à 1 Hz |
| (1) : Polymère (a) | 14,2 Pa | 2,7 Pa |
| (2) : Super absorbant | 187,2 Pa | 58,3 Pa |
| (1) + (2) | 201,4 Pa | 61 Pa |
| Gel à changement de phase | 477,7 Pa | 100,4 Pa |

Le tableau 5 donne les modules viscoélastiques à 25°C à 5 Pa d'un gel à changement de phase contenant 1% massique de (a) et 4% massique de super absorbant.

Des analyses calorimétriques de 5 à 16 mg de gel à changement de phase à partir du polymère (a) avec un micro DSC VII SETARAM en mode de cycle refroidissement/réchauffement de -45°C à 40°C avec une vitesse de programmation de 1°C/min, ont montré que l'autre avantage de tels systèmes est qu'on parvient à un meilleur compromis au niveau de l'énergie thermique restituée (Q_{f}) par chaleur latente avec des pertes inférieures à 18% par rapport au MCP, sans modification notable des températures de fusion (T_{f}), comme le décrivent les exemples du Tableau 6. Nous obtenons des résultats similaires avec les polymères de type (b).

**Tableau 6**

| | Fraction massique en super absorbant | | | |
|---|---|---|---|---|
| Fraction massique en polymère (a) (y=0,92, z=0,03 et t=0) | 0% | 4% | 5% | 6% |
| 0% (MCP seul) | T_{f}= -9°C | - | - | - |
| | Q_{f}=287,1 J/g | | | |
| 1% | T_{f} = -9,7°C | T_{f} =-9,7°C | T_{f}= -9,4°C | T_{f}=-9,7°C |
| | Q_{f} =279,1 J/g | Q_{f}=251,1 J/g | Q_{f}=250,9 J/g | Q_{f}=238 J/g |
| Perte Q/MCP | 2,8% | 12,5% | 12,6% | 17,1% |

Le tableau 6 donne les valeurs des énergies restituées (Q_{f}) et températures de fusion (T_{f}) d'un gel constitué d'un **MCP (KCl 21**% en masse dans l'eau), à différentes fractions massiques en super absorbant et contenant 1% massique de polymère (a) avec comparaison avec le **MCP** de base.

La présente invention concerne donc une formulation comprenant un matériau à changement de phase **M,** une base gélifiante **G,** des grains de polymère réticulés **P.**

Le matériau à changement de phase **M** est constitué de solutions salines, de sels hydratés eutectiques ou de mélanges de ces sels eutectiques. Le sel hydraté ou le mélange de sel hydraté utilisé est choisi en fonction de sa température de fusion et de la chaleur latente de fusion de celui-ci, de façon que ces propriétés soient adaptées à l'application visée. Le point de fusion du matériau à changement de phase **M** peut être compris entre ―40°C et +90°C, et préférentiellement entre ―20°C et +65°C et son enthalpie de fusion peut être comprise entre 100 kJ/kg et 330 kJ/kg Il peut être choisi parmi les sels suivants (liste non limitative) : AlK(SO₄)₂•12H₂O; Al₂(SO₄)₃•18H₂O ; Al(NO₃)₃•8H₂O ; Ba(OH)₂•8H₂O ; CaBr₂•6H₂O ; CaCl₂•6H₂O ; CaBr₂•6H₂O/NaCl ; Ca(NO₃)₂•4H₂O ; Cd(NO₃)₂•4H₂O ; Fe(NO₃)₂•6H₂O ; KCH₃COO•1,5H₂O ; KCl•H₂O ; KF•2H₂O ; KF•4H₂O ; K₂HPO₄•6H₂O ; K₃PO₄•7H₂O ; LiCl•H₂O ; LiClO₃•3H₂O ; LiNO₃•3H₂O ; MgCl₂•H₂O ; Mg(NO₃)₂•2H₂O ; Mg(NO₃)₂•6H₂O ; NaCH₃COO•3H₂O ; NaCl•H₂O ; Na₂CO₃•10H₂O ; Na₂B₄O₇•10H₂O ; Na₂HPO₄•7H₂O ; Na₂HPO₄•12H₂O ; NaOH•H₂O ; NaOH•3.5H₂O ; Na₃PO₄•12H₂O ; Na₂P₂O₇•10H₂O ; Na₂SO₄•10H₂O ; Na₂S₂O₃•5H₂O ; Na₂SO₄•10H₂O, ; Na₂SO₄•10H₂O, ; Na₂SO₄.10H₂O/ NaCl, H₂O; ZnCl₂•3H₂O ; Zn(NO₃)•2H₂O ; Zn(NO₃)₂•4H₂O ; Zn(NO₃)₂•6H₂O.

Le matériau à changement de phase peut contenir un agent de nucléation, connu de l'homme du métier, qui permet de réduire le phénomène de surfusion caractérisé en un décalage entre la température de cristallisation et la température de fusion de **M**.

La base gélifiante **G** est préférentiellement un polymère hydrosoluble porteur de motifs hydrophobes qui est solubilisé dans le matériau à changement de phase **M** à l'état liquide (au dessus de sa température de fusion). Le polymère est décrit plus haut sous les dénominations des polymères (a) et (b).

La masse moléculaire des polymères peut varier entre 0,3x10⁶ g/mol et 3x10⁶ g/mol. La concentration des polymères dans **M** peut varier entre 0,5 et 10% massique selon la masse moléculaire, et préférentiellement entre 1 et 2% massique pour une masse moléculaire d'environ 10⁶ g/mol. La fraction massique de polymère (a) ou (b) est ajustée de façon que la base gélifiante **G** possède une viscosité mesurée (à une température supérieure à la température de fusion du MCP **M)** à un gradient de cisaillement de 1 s⁻¹ comprise entre 0,1 Pa.s et 1000 Pa.s et préférentiellement entre 1 Pa.s et 100 Pa.s et une viscosité à 10 s⁻¹ comprise entre 0,01 Pa.s et 100 Pa.s et préférentiellement entre 0,1 Pa.s et 10 Pa.s.

Les grains de polymère réticulés **P** proviennent de la synthèse de copolymères d'acide acrylique et d'acrylate de sodium réticulés. Ils peuvent être de trois formes : polymères ramifiés, polymères réticulés rigides ou polymères réticulés élastiques. Les masses moléculaires de ces copolymères sont supérieures à 10⁶ g/mol, et préférentiellement comprises entre 5x10⁶ g/mol et 10⁷ g/mol. Le taux d'hydrolyse des copolymères est compris entre 5% et 20%, et préférentiellement égal à 10%. Les copolymères sont réticulés lors de la synthèse par un réticulant préférentiellement organique. La quantité de réticulant permet d'obtenir des gels qui sont soit élastiques soit rigides. Les gels obtenus sont alors broyés et séchés puis tamisés afin d'avoir différentes granulométries. Les granulométries de ces grains peuvent varier entre 0,2 mm et 4 mm. Les grains de polymères présentent la particularité de gonfler dans l'eau. Ainsi, une fois plongés dans l'eau, des grains de polymères réticulés rigides dont la granulométrie est comprise entre 1 mm et 4 mm gonflent jusqu'à des diamètres voisins de 3 cm. Le taux de gonflement des grains de polymère réticulés est de l'ordre de 10. Les mêmes grains, plongés dans un MCP gonflent également : le diamètre maximal de gonflement est de l'ordre de 1 cm (effet de sel). Les grains préférentiellement utilisés sont les polymères réticulés rigides. La concentration en grains peut être comprise entre 1% et 6% massique.

Un exemple de formulation **A** peut être la suivante :
- un MCP constitué de 21% massique de KCl,
- 1% massique de polymère hydrosoluble de synthèse (a) à base d'acrylamide et d'acrylate, porteur de motifs hydrophobes, de masse moléculaire 10⁶ g/mol avec un taux d'hydrolyse d'environ 5%,
- 4% massique de grains, ou particules super absorbantes, de polymères réticulés rigides de granulométrie comprise entre 0,2 mm et 1 mm.

Cette formulation **A** est aisément préparée à condition de créer un vortex suffisant pour disperser la poudre du polymère (a) et de la laisser gonfler une nuit sous agitation modérée, de créer à nouveau un vortex suffisant pour ajouter les grains de super absorbants, de laisser agiter quelques minutes avant d'introduire la composition dans les contenants finaux, maintenus sous agitation modérée pendant 48 heures environ.

La viscosité apparente, pour un taux de cisaillement de 100 s⁻¹ de cette formulation **A** au remplissage est de 5 Pa.s à 25°C, l'énergie restituée est de 251 J/g et la perte en énergie par rapport au MCP est de 12,5%. Le rapport massique MCP/poudres est environ de 16 pour la formulation préférée **A**.

Un protocole de préparation pour 1 kilogramme de gel à changement de phase suivant la formulation préférée **A** se décompose ainsi :
- pesée de 940 grammes de MCP, dans lesquels seront dispersés les constituants de la composition,
- pesées séparées de 10 grammes de polymère (a) et 50 grammes de super absorbants,
- mise en place du récipient contenant le MCP sous un agitateur IKA à palette constituée de 6 trous, réglé à une vitesse d'environ 600 tour/min,
- introduction progressive des poudres de polymère (a),
- gonflement du polymère (a) sous agitation modérée pendant 16 heures,
- introduction progressive sous forte agitation des grains de super absorbants,
- transvasement dans les contenants avant structuration du gel.

L'état complètement gélifié (défini par l'atteinte d'un module élastique stable dans le temps) n'intervient donc que dans le contenant d'utilité.

Les contenants peuvent être des enveloppes souples, rigides, sous forme de plaques, de tubes, de sphères, ou toute autre forme adaptée à l'utilisation finale.

Autres exemples de formulations utilisant le même protocole de mise en oeuvre :

| Exemple B | | pour 1kg |
|---|---|---|
| M | 66.6% CaCl₂, 6H₂O + 33.3% MgCl₂, 6H₂O | 954 g |
| G | polymère (a) avec y=0,05, z=0,02, t=0,2 | 6 g |
| P | polyacrylamide réticulé de granulométrie comprise entre 0,2 mm et 1 mm | 40 g |

| Exemple C | | pour 1kg |
|---|---|---|
| M | Na₂SO₄, 10H₂O | 960 g |
| G | polymère (a) avec y=0,05, z=0,02, t=0,151 | 10 g |
| P | polyacrylamide réticulé de granulométrie comprise entre 0,2 mm et 1 mm | 30 g |

| Exemple D | | pour 1kg |
|---|---|---|
| M | Na₂SO₄, 10H₂O | 920 g |
| G | polymère (b) de type hydroxypropyl guar hydrophobisée | 30 g |
| P | polyacrylamide réticulé de granulométrie comprise entre 0,2 mm et 1 mm | 50 g |

Ces gels de matériaux à changement de phase peuvent trouver des applications dans de nombreux domaines où un effet capacitif est recherché dans la gamme de température décrite [―40°C, +90°C].
On peut citer l'utilisation de ces gels pour la réfrigération, le stockage de froid, la climatisation, mais également l'isolation thermique dans le bâtiment pour écrêter les variations de températures diurnes et nocturnes, et l'utilisation de matériaux à changement de phase gélifiés selon l'invention pour l'isolation thermique de conduites, de panneaux et cloisons, de panneaux solaires, d'éléments de batteries.

## Revendications

1. Composition d'un gel à changement de phase comportant les éléments suivants :
■ un matériau à changement de phase (MCP) comportant au moins un sel en solution aqueuse formant un eutectique,
■ au moins un polymère hydrosoluble comportant des motifs hydrophobes,
■ des grains super absorbants de polymère réticulés de granulométrie comprise entre 0,2 mm et 4 mm.

2. Composition selon la revendication 1, dans laquelle le polymère hydrosoluble est un polymère de synthèse (a) de structure suivante: 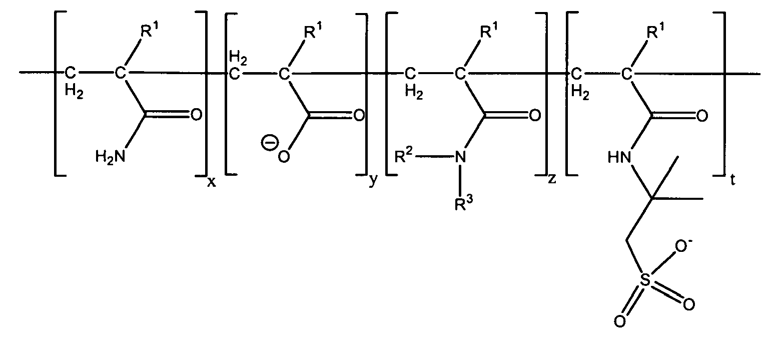 R¹, semblables ou différents, sont un radical méthyle ou hydrogène,
R² est au moins l'un des radicaux suivants:
■ un radical alkyle linéaire ou ramifié contenant entre 6 et 30 atomes de carbone, et préférentiellement entre 9 et 18 atomes de carbone,
■ un radical cycloalkyle, contenant entre 5 et 8 carbones cycliques éventuellement substitué,
■ un radical aryle contenant entre 6 et 12 atomes de carbone, éventuellement substitué, ou toute autre chaîne alkylaromatique
R³ est soit :
■ un hydrogène,
■ un radical méthyle,
■ R², semblables ou différents,
avec x+y+z+t=1

3. Composition selon l'une des revendications 1 ou 2, dans laquelle le polymère hydrosoluble de synthèse (a) contient au moins une unité monomère porteur de motifs hydrophobes avec z compris entre 0,005 et 0,03, et préférentiellement entre 0,01 et 0,02, et dans laquelle y est compris entre 0,01 et 0,1.

4. Composition selon l'une des revendications 1 à 3, dans laquelle le polymère hydrosoluble de synthèse ne contient pas d'unité monomère porteur de motifs sulfonés, soit t=0.

5. Composition selon l'une des revendications 1 à 3, dans laquelle le polymère hydrosoluble de synthèse contient au moins une unité monomère porteur de motifs sulfonés avec t compris entre 0,03 et 0,3, et préférentiellement entre 0,1 et 0,2.

6. Composition selon l'une des revendications 1 à 5, dans laquelle le polymère hydrosoluble de synthèse possède une masse moléculaire comprise entre 0,3x10⁶ g/mol et 3x10⁶ g/mol, et préférentiellement comprise entre 0,8x10⁶ g/mol et 1,2x10⁶ g/mol.

7. Composition selon la revendication 1, dans laquelle ledit polymère hydrosoluble est un polymère naturel du type polysaccharide modifié chimiquement et porteur de motifs hydrophobes, issu de la famille des guars ou des celluloses et porteurs d'au moins un radical alkyle linéaire ou ramifié entre C10 et C20 atomes de carbone, et préférentiellement entre C12 et C18, pour une masse moléculaire comprise entre 0,3x10⁶ g/mol et 3x10⁶ g/mol, et préférentiellement comprise entre 0,8x10⁶ g/mol et 1,2x10⁶ g/mol.

8. Composition selon l'une des revendications précédentes, comprenant entre 0,5% et 3% de polymère hydrosoluble comportant des motifs hydrophobes, pourcentage rapporté à la masse totale de la composition, et de préférence entre 1% et 2%.

9. Composition selon l'une des revendications précédentes, dans laquelle lesdits grains super absorbant sont composés de copolymère d'acide acrylique et d'acrylate de sodium réticulé partiellement hydrolysés à environ 10%, ramifiés, réticulés rigides ou élastiques.

10. Composition selon l'une des revendications précédentes, comprenant entre 3% et 5% massique de grains de polymère réticulés, pourcentage rapporté à la masse totale de gel à changement de phase.

11. Composition selon l'une des revendications précédentes, dans laquelle ledit eutectique possède un point de fusion compris entre -40°C et +90°C et préférentiellement entre -20°C et +60°C.

12. Composition selon l'une des revendications précédentes, dans laquelle ledit matériau à changement de phase comporte 21% massique de sel KC1 en solution aqueuse.

13. Composition selon l'une des revendications 1 à 11, dans laquelle ledit matériau à changement de phase comporte 44% de Na₂SO₄ en solution aqueuse.

14. Méthode de gélification d'un matériau à changement de phase (MCP) pour le stockage et la restitution d'énergie thermique par chaleur latente, dans laquelle on effectue les étapes suivantes :
- on prépare une composition aqueuse selon l'une des revendications 1 à 13,
- on injecte ladite composition dans des contenants avant la structuration du gel.

15. Méthode selon la revendication 14, dans laquelle on optimise les propriétés mécaniques du gel à changement de phase par la quantité de grains super absorbant de polymère réticulés ajoutée.

16. Application de la composition selon les revendications 1 à 13 et de la méthode selon les revendications 14 à 15 au stockage et à la restitution d'énergie thermique.
